# EUROPEAN PATENT APPLICATION

(11) **EP 2 629 512 A1**
(43) Date of publication of application: **21.08.2013**
(21) Application number: 12305160.9
(22) Date of filing: 14.02.2012
(51) Int. Cl.: H04N 7/14

(54) **Method and arrangement for generating and updating A composed video conversation**

(71) Applicant: Alcatel Lucent, 75007 Paris (FR)
(72) Inventor: Aerts, Maarten, 9120 Beveren-Waas (BE); Verde, Orlando Jesus, 2018 Antwerp (BE); Tytgat, Donny, 9000 Gent (BE); Van Raemdonck, Wolfgang, 2140 Antwerp (BE)
(74) Representative: ALU Antw Patent Attorneys

(57) **Abstract**

A method for generating a composed video conversation from respective video fragments with associated metadata provided so far by a plurality of respective users via respective user clients to a video conversation server arrangement at a particular moment in time , comprises the steps of
- activating a video communication service on said respective user clients for setting up a communication with said video conversation server,
- analyzing said associated metadata by said video conversation server
- whereby in case said analysis indicates that a new video conversation is to be started by a user client, assigning a video conversation identification of said new video communication by said server , and providing said identification to said user client, followed by uploading at least one video clip from said user client to said server,
- and in case said analysis indicates that an existing video conversation is to be updated, determining an updated sequence order of said respective video fragments provided so far, and encoding an updated sequence of a subset of said respective video fragments for thereby generating an update of said composed video conversation at a particular moment in time .

## Description

The present invention relates to a method for automatically generating and updating composed videos conversations.

Video communication sessions such as video conferences nowadays require participants to be available at the same time. This is in contrast to other communication channels such as email or Internet forums, wherein e.g. responses to questions can be posted in an asynchronous way, eliminating the need for people being simultaneously engaged in the communication session

In general such Internet discussion boards are text based where people are adding replies on other people's input. The internet forum itself builds the textual hierarchy of the whole discussion, which hierarchy is generally denoted a thread. To follow a discussion a participant has to read the whole thread.

It is an object of embodiments of the present invention to present an automated video conversation generation and updating method and arrangement, allowing users to easily post an additional video stream as a reply to and within any part of an existing video, for thereby enabling the automated generation of a composed threaded video.

This object is achieved by a method for generating and updating a composed video conversation from respective video fragments with associated metadata provided so far by a plurality of respective users via respective user clients to a video conversation server arrangement at a particular moment in time , said method comprising the steps of
- activating a video communication service on said respective user clients for setting up a communication with said video conversation server,
- analyzing said associated metadata by said video conversation server
- whereby in case said analysis indicates that a new video conversation is to be started by a user client, assigning a video conversation identification of said new video communication by said server , and providing said identification to said user client, followed by uploading at least one video clip from said user client to said server,
- whereby in case said analysis indicates that an existing video conversation is to be updated, determining an updated sequence order of said respective video fragments provided so far, and encoding an updated sequence of a subset of said respective video fragments for thereby generating an update of said composed video conversation at a particular moment in time .

In an embodiment at least one of said video fragments provided by at least one of said user clients is recorded under control of said video communication service.

In another embodiment said recording under control of said video communication service is taking place during the time said at least one user associated to said at least one user client is watching the composed video conversation

The present invention relates as well to embodiments of a user client adapted to be cooperatively coupled to a video conversation server arrangement, said user client being further adapted to
- receive inputs from a user related to the creation or joining of a video conversation,
- receive inputs from a user with respect to video recordings to be performed by a recording device of said user,
- translating said inputs from said user with respect to said recording device to control the operation of said recording device coupled to said user client,
- receiving video information from said recording device for provision to said conversation server arrangement,
- generating metadata from said user inputs, and said recorded video information with respect to the recorded video, for further provision to said video conversation server arrangement.

In an embodiment the user client is further adapted to control the recording of said recording device upon displaying the latest version of said video conversation to said user.

In another embodiment the user client is further adapted to mark said recorded video information as either implicit or explicit video information, and providing said information within said metadata to said server.

The present invention relates as well to embodiments of a video conversation server arrangement comprising
- a video storage for receiving respective video fragments from respective users clients,
- a video sequence manager adapted to receive respective metadata associated to said respective video fragments for being incorporated into a particular video conversation, from said respective user clients, said video sequence manager being further adapted to decide whether at least one of said fragments has to be split into several sub-fragments, and to update the sequence information indicating the relative position of said different video fragments and sub-fragments with respect to each other in the video conversation at a particular point in time,
- a virtual composer module adapted to receive the updated sequence information from said video sequence manager, and to update said video conversation at a particular point in time based on said updated sequence information and the respective video fragments and sub-fragments as provided in said sequence information.

In an embodiment the virtual composer module is further adapted to encode said updated sequence of a subset of said respective video fragments for thereby generating an update of said composed video conversation at a particular moment in time, for being stored within said video storage .

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 shows a high level overview of an embodiment of the method,
Figs. 2a-b depict several alternatives for a client/server configuration,
Fig. 3 shows a more detailed embodiment of the interactions between the clients and the server,
Figs 4a-c show an example of the generation of a composed video, in function of time,
Fig. 5 shows a flowchart of an embodiment of the method at the client's side,
Fig. 6 shows a detailed embodiment of a virtual composing module at the server's side.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

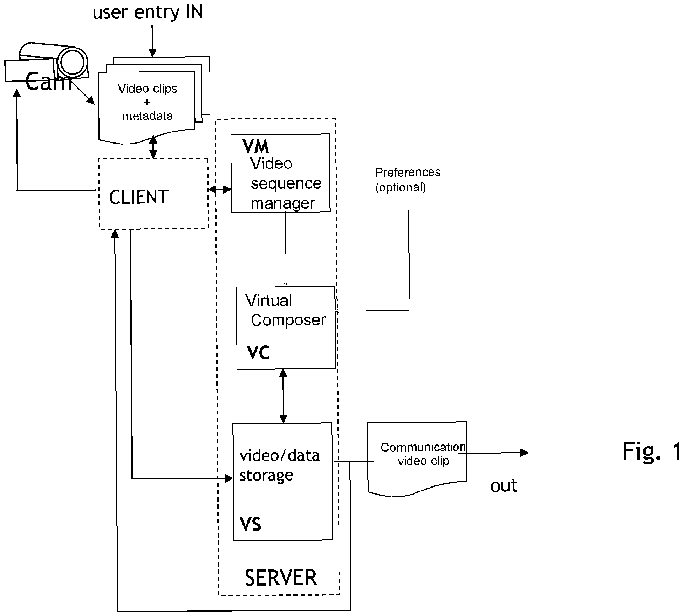

Fig. 1 shows a high level view of an embodiment of a system according to the invention. It may comprise a client/server video communication application service. A user client, denoted on Fig. 1 by "CLIENT" allows a user to start a new video conversation, to watch conversations and browse through summaries, insert pre-stored or live video at chosen or default positions in the conversation, have user's live reactions such as nodding, laughing, recorded implicitly and added to the conversation to create conversation dynamics. The user entry data will thus generally comprise video clips and associated metadata for referring to a particular video conversation, indicating where to insert the new user's video clip etc. The user entry data may, besides video, also comprise further data such as e.g. still images, presentations, pictures, documents, again accompanied by associated metadata, which data a user might want to insert or to append to an existing video conversation.

The server, denoted SERVER, is adapted to store all video and data entries and metadata, and to continuously compile a single conversation video from multiple asynchronously recorded feeds whenever they will be provided to the server. These compilation actions may thus comprise decoding the original video files, virtual directing, background subtraction, colour and appearance adaptation, and encoding the new generated video conversation as will be explained in a further paragraph. The server may also be further adapted to summarize existing video conversations and to notify user clients of relevant changes to the conversations they're involved. Such a summary may comprise a very short version of an existing video conversation, highlighting some scenes such as to give potential viewers a quick idea of the subject and the contents of the video conversation. This will allow these users to quickly browse through the existing available video conversations.

Optionally the server can also be adapted to create an associated keyword database, for facilitating a user to efficiently browse through or even within one video conversation.

The user client application thus provides the video information as well as the metadata to the server. In Fig. 1 this server is further depicted as comprising 3 different modules with a specific function. However in other embodiments all these modules can be realized by means of one single entity, e.g. a processing unit, capable of performing all functions as will be described hereafter.

A first function, realized by a first module in Fig. 1, comprises the earlier mentioned compilation of a composed video, being denoted by "virtual composer" in Fig. 1. The virtual composer is in general adapted to use sequence order information, provided by a second functional module denoted sequence manager, together with optional preferences e.g. regarding what to further highlight and/or how to do this, to create a composed video clip which conveys the full communication session at a certain moment in time. This composed video clip is then provided to a third module, a video/data storage module VS, from which users can then further view this, via the user client application.

Updating of the video communication sequence order, e.g. by indicating which user has entered which video at which moment in time, whether recordings were made implicitly or explicitly, what other submitted data was entered, optional video tags added by a user, etc , is performed by the " video sequence manager" module VM of fig. 1 .

The video/data storage memory module VS is thus adapted to store the video fragments, the entire video communication as created at a certain moment in time, or other submitted data such as e.g. a power point presentation, a text document, etc.

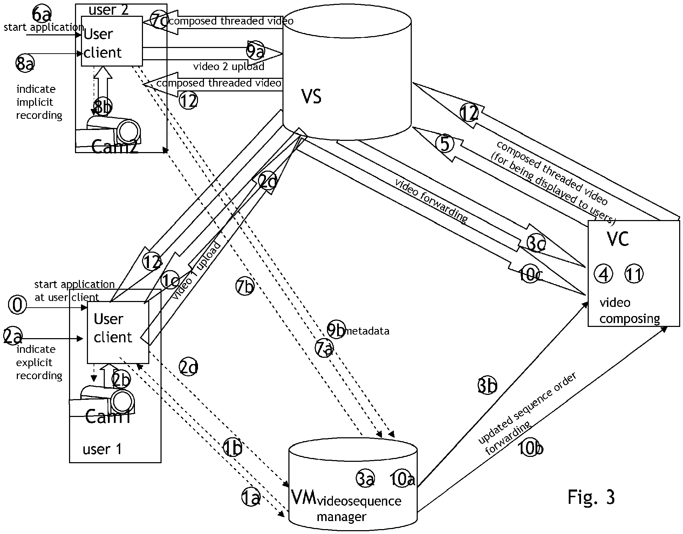

The client application itself will be further adapted to control a video recording device, denoted CAM, on Fig. 1, as will be explained later with reference to Figs 3-5.

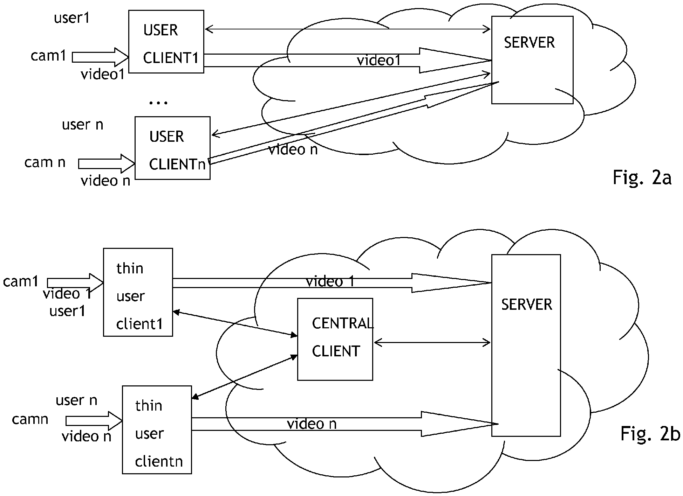

Fig. 2a further shows that a this user client application can be installed on a user's own equipment such as a laptop, mobile phone, pda, gaming console, etc.. In this case all messages and data from the user will first pass through the user client, before being forwarded to the server.

Alternatively , as depicted in fig. 2b, the user client application may be distributed between a small locally installed "thin client", which can communicate with a central, but remote user client application, thus provided as a central client service in a communications network. This central client service may in an embodiment again comprise a number of individual instances of software, one per individual client.

Upon accessing this application, the user will be allowed to, via this thin user client, provide one or more video fragments, denoted video clips, together with metadata, directly to the server. These metadata can thus be indicative of the start of a new video communication, or, for an existing one, in which part these additional video clips are to be inserted or not. This will be explained more into detail in a further paragraph. These video clips may be readily available, but can also be the result of a live recording by a camera such as a webcam or other camera, which recording is controlled by the user client operation itself. Also in this case the thin user clients will be able to control the recording device directly, but they can transmit the video data directly to the storage server. Details will also be further provided in a further paragraph.

These functions will now all be further explained by means of the embodiment depicted in Fig. 3.

In an embodiment, depicted in Fig. 3, a server arrangement comprises a video/data hosting server VS for hosting the different video fragments or clips and possibly additional content data as posted by the different users. The arrangement comprises as well a virtual composer VC for generating successive versions of a composed video, and a video sequence manager VM for managing the different video conversations with respect to their contents, more in particular the sequence order of the different communication clips and data as provided by the various users.

While these are depicted in Fig. 3 as consisting of different entities, the video hosting server, virtual composer and video sequence manager may equally be realized by means of one single device or software program, or any combination of hardware and software, with the functions being combined or separated in 1, 2 or 3 different server modules.

In the embodiment of Fig. 3 the user client applications are locally implemented at the user's premise, as in the configuration depicted in Fig. 2a. However, a remote user client, running e.g. as a software application on a central application server within a communications network, can as well be activated by means of a user via a user interface, acting as a local thin client to this client service application. This corresponds to the situation as was depicted in Fig. 2b. Alternatively the client service can also be downloaded by the different users via such user interface e.g. a web interface.

In the embodiment of Fig. 3 two users are depicted for sake of simplicity, but of course implementations serving a lot of users are possible.

When a user, e.g. user 1, wants to start a particular video communication, this user activates the user client module e.g. by means of clicking an icon, or by browsing to a web address. This is depicted by step 1 in Fig. 3. This activates the video communication service, and the user client may e.g. show to the user a starting webpage from which a user may further select further options such as browsing through different existing video communications, looking to different summaries etc. In case a user is interested in one particular video communication, the user will select this one by indicating or pointing to this particular existing video communication, which can accordingly be displayed to the user for further play-out.

As in this example user 1 wanted to start a new video conversation, this user has to inform the server about this. This user will then send a message to the video sequence manager, indicating that he/she wants to start a new conversation. This is depicted by step 1α. VM responds to the user client in step 1 b, informing the user about the assigned identification of this new communication session. Upon receipt of this message the user can immediately upload a video which is ready, or may decide to start recording him/herself, and to provide this recording as the first video clip of the new communication session. The latter option is shown in Fig. 3: the user indicates in step 2a to the user client that he will start recording himself, which is followed by a command 2b from the user client to the recording device, depicted as caml , followed by a provision of a video, depicted by the thick white arrow from cam1 to user client 1. This video is subsequently uploaded in step 2c from the user client to the video/data storage, and in parallel, in step 2d, the user client informs the video sequence manager that this video was provided to VS, with additional metadata such as the identification of the new communication to which this new video will belong, the identification of the clip itself, of the user, etc.

Upon having received this information that a new video clip was posted in relation to a new video conversation video sequence manager VM analyses the metadata and, based on the analysis, will in this case generate a first version of the sequence order data in step 3a. In step 3b, this information is forwarded to the virtual composer VC, which, upon analysis of this information will fetch the video clip from the video/data server, in step 3c..The virtual composer VC will then generate in step 4 a first version of the video communication, for provision back to the video/data server VS. The video/data server will be able to recognize that this concerns a video communication, in contrast to a mere video clip, and is adapted to further provide such video communications to the different user clients, upon their request via the client application software.

When another user wants to join a particular video communication, characterized by a unique video communication identifier, this user activates as well the user client module e.g. by means of clicking an icon, or by browsing to a web address. This activates the video communication service, and this user's client may e.g. show to the user a starting webpage from which a user may further select further options such as browsing through different existing video communications, looking to different summaries etc. In case this user is interested in one particular video communication, the user will select this one by indicating or pointing to this particular existing video communication, which can accordingly be displayed to the user for further play-out. The indication or pointing of the user to the particular identified video communication involves a 'fetch request' from the user client to video manager VM. VM will, upon receipt thereof, indicate to the user that this video communication can be retrieved from the video/data storage server. The user can then start watching this selected video communication and respond by posting his video or other data to this storage server.

In Fig. 3, user2 activates the user application client software in step 6a via the user input "start application" from the user to the client software, similar as step 0 for user 1. User client 2 may then e.g. show to the user a starting webpage from which a user may further select further options such as browsing through different existing video communications, looking to different summaries etc. In case user 2 is interested in the video communication earlier started by user 1, user 2 the user will select this one by indicating or pointing to this particular existing video communication. The indication or pointing of the user to the particular identified video communication involves a 'fetch request' from user client to video manager VM, depicted by step 7a., by which the user client 2 informs VM that user2 wants to select this particular identified video communication. This is followed by an message from VM to the user client, in step 7b, for informing the user client where to retrieve the selected identified video communication, e.g. via the provision of an url to VS. In step 7c the video is then retrieved from VS and watched by the user client 2.

While user 2 is watching this video conversation, this user may also decide to instruct his/her camera to record him-or herself, during the process of watching this composed video. This information is provided by the user to the user client in step 8a, which accordingly provides instructions to the recording device of user2, in this case cam2. These instructions are depicted by the small dashed arrow from user client 2 to cam2. Thus during the time user 2 is actually watching the video conversation, provided to him in step 7c, in step 8b, he is being filmed by the video camera .

This "non-active" video recording is called an implicit video recording. User 2 may further indicate, during his/her watching of the selected video communication while being simultaneously recorded in step 8b, by means of specific inputs, to explicitly interrupt the watching of the video communication at a certain moment, additionally insert an explicit video recording, by which is meant that this user now actively wants to participate in this video conference, e.g. by asking a question . After this user has finished with his explicit recording , he can further watch the remainder of the composed threaded video, while being filmed. This latter part will again constitute an implicit recording.

Alternatively user2 may decide to merely upload an available video for being appended to the existing video conversation.

In either case, user 2 needs to inform the video manager VM about the additional data which needs to be appended/inserted in the existing video conversation his user is currently watching. This is represented by the dashed arrow from user client 2 to VM, in step 9, where user client2 will provide all this information under the form of metadata to the video sequence manager VM.

In parallel the video clip itself will be provided by user client 2 to VS. In the example depicted in Fig. 3, the implicit/explicit recording video data 8b will be provided to VS in step 9a.

Upon having received the metadata, VM analyses them in step 10a, and, based on the analysis, will in this case again generate an update of the sequence order data in step 10a. In step 10b, this updated information is forwarded to the virtual composer VC, which, upon analysis of this information will fetch the existing video communication, as well as the newly added video2 from the video server, in step 1 0c..The virtual composer VC will then generate in step 11 an update of the video communication, for provision back to the video/data server VS. The video/data server will be able to again recognize the updated video communication, and to store the latest updated version for further provision such video communications to the different user clients, upon their request via the client application software.

It is to be remarked that the video clips can be streamed from one module to the other. This means that, while a user is watching a streamed video, in step 7c, the implicit or explicit recordings of step 8b may already be streamed in parallel back to the video/data server in step 9a.

It is also to be remarked that, besides video, also other content can be provided to the video/data server by the different users.

In either case the video composing module has to collect the different posted data, decode them, possibly cut them into different fragments, place the fragments the one after the other in the correct sequence, and re-encode the complete composition representing the video communication at a particular point in time

The metadata, provided in step 9b to the video sequence manager, may contain an identification of the video communication in which the new entry has to come, an identification of the user and of the recorded video fragments, an indication of the parts being implicit or explicit recordings, timing indications, an indication of the extra data provided such as the power point presentation and where and at which moment it should be shown in the composed video,... This metadata is used in VM to update the sequence information representation in step 10a.

It is to be remarked that the composed video may comprise a composition both in space and in time, meaning that the input video fragments from all participating users can be shown simultaneously. Thus while the explicit recording to user 1 is shown, the implicit recording of user 2, while watching this video, may be shown as well.

The virtual composer VC is thus adapted to generate a smooth and sound composed video clip based on the latest version of the composed video and the second video fragment, in general thus being the last added video fragment or data. The updated sequence information is used to position the different fragments on the timeline. The virtual composer is optionally also taking care about visual and style aspects, like appropriate color correction for the different fragments and transitions. The new composed video communication can be watched again and a new question/reply etc can be posted to the discussion and the process starts all over again.

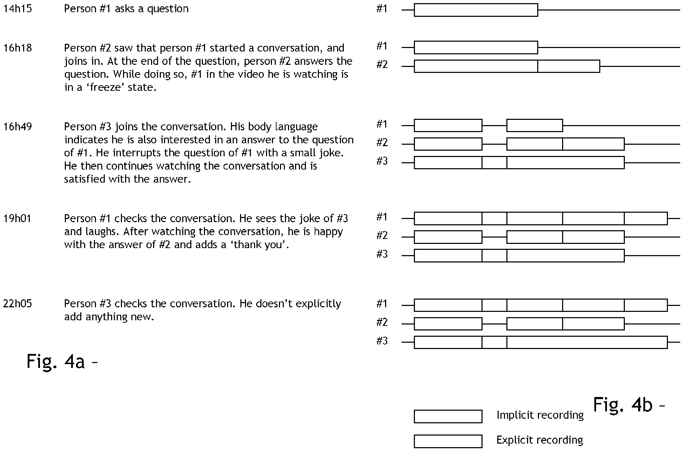

A more detailed possible implementation will now be described with reference to Figs 4a-b.

At 14h15, person 1 starts a conversation using the asynchronous video chat application, as provided by the user client. (S)he asks a question in front of a web cam, and stops the recording. The composed video column in figure 4b illustrates what information is available to the video storage, which can thus also be fetched by the virtual composer after the event that was described in the same row. So after event 1, a bit after 14h15, a recording of person 1 asking the question is available.

At 16h18, person 2 joins the session via the client application, and sees that a person 1 asked a question. Person2 watches the question, meanwhile the reactions of person2 are being recorded. This is indicated with the non-hatched white bar in the stored video column in Fig. 4b, which means that it is indicated as an implicit recording. After the question of person 1, person 2 answers the question. The system recognizes this as an explicit recording, which is shown as a hatched bar in Fig. 4b. This recognition can be done by an explicit action by the user e.g. by pressing a key when (s)he wants to respond or in an automated manner e.g. by use of voice activity detection.

The virtual composer can simultaneously show both video fragments in one view, in this case the composed video is just the juxtaposition of both fragments in one view.

At 16h49, person3 joins the client session and is thus able to watch the composed video communication so far. While doing so he is implicitly recorded. The client software can analyze this implicit recording such that it may detect that the body language of person 3 may thus indicate that he is also interested in the question of person 1. While person 1 is asking the question, person 3 briefly interrupts person 1 with a joke. This can be seen in the provided video column; in which case an explicit recording is added for person 3 with this joke. After the joke, person 3 continues to watch the question and answer and leaves the conversation.

Upon receipt of the video of this person as well as of the associated updated metadata by the virtual composer, the latter will interrupt the time lines of the videos of the two other people during the insertion of the joke of person 3. This interruption may comprise an insertion of an idle period, denoted a freeze . The remainder of the videos will then be shown in parallel in the composed view.

At 19h01, person 1 decides to re-join the conversation via the associated client application. While watching the composed video he sees the joke of person 3 and smiles. Note that his/her reaction to this joke is recorded through an implicit recording; thus this implicit recording of the reaction to the joke, provided the laughing takes as long as the joke, is now inserted in the freeze period for the time of the joke. Person #1 continues to watch the conversation and thanks person #2 for the answer to the question, which is thus recorded as explicit.

At 22h05, person 3 joins the application and conversation and doesn't explicitly add anything new. Note that the implicit recordings of 19h01 may be overwritten, thus refreshed with up-to-date recordings. But in other embodiments they can just be shown in parallel, e.g. by displaying on two parts of the screen. This of course requires additional compositional work, which may thus only be available if expressly requested by a user. The explicit recordings however are never overwritten. This mechanism ensures that the important data is still available, while reactions are being kept up-to-date with the conversation dynamics.

The mechanism of implicit and explicit recordings enables an experience similar as a live conversation where reactions can be seen whilst not requiring people to be actually live. Pausing the other people's time lines while an explicit recording is added facilitates linearity in the video which enables a lean-back experience when viewing the conversation as opposed to an experience where different paths of the conversation need to be selected somehow by the user or a virtual composer.

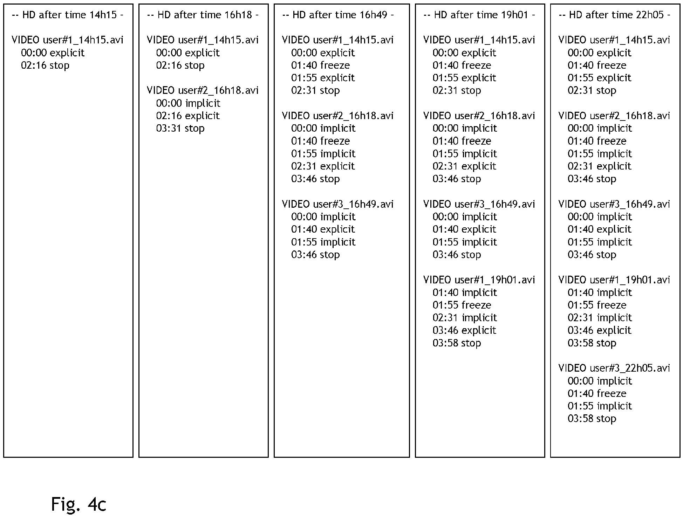

Fig. 4c is a possible implementation of the video sequence structure update, as performed by the video sequence manager VM.

How a user sees the conversation is dependent on the virtual composer implementation. An envisioned implementation would be to use a common virtual room where people are placed around a table using background removal to cut out the people from their real environment. The system can move the camera around, and can switch between explicit recordings and implicit recordings, or provide overview shots where both implicit and explicit recordings are shown. This gives the viewer a good overview of not only explicit things such as the question and answers, but also the reaction of people. Furthermore it adds to the illusion that people are actually live in the conversation, while they are not.

The system provides a way of combining the advantages of video communication with the advantages of offline-based systems such as email or internet forums.

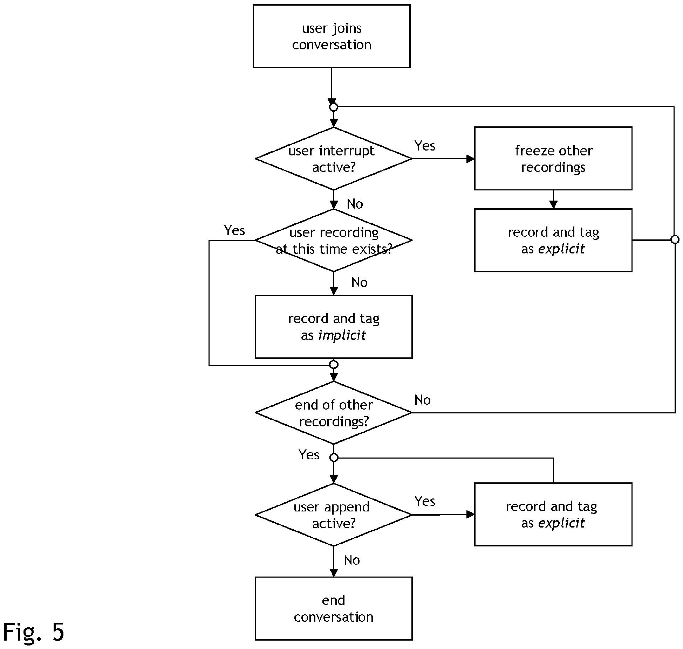

Fig. 5 further provides some details on part of an implementation of the client application.

When a user joins a conversation, it is first checked whether a user interrupt is active. This user interrupt is a signal, generated by a user, e.g. via clicking on a mouse or another button, and informing the user client that the user wants to perform an explicit recording. In case the user interrupt is active the other recordings such as the explicit and implicit recordings of this and other users previously participating to the conversation are frozen, and the recording device will start recording and transmit the recorded video to the user client. At the same time the user client will indicate that this video concerns an explicit recording.

In case a user interrupt is not active, it is checked whether another earlier implicit simultaneous recording of this user exists, which was made during an earlier watching of the user of this conversation.

If there was no earlier user recording at the same internal video conversation time, the camera starts recording and the video is indicated as being an implicit video recording, which metadata is subsequently provided to VM.

If all recordings have come to an end, it is checked whether user append is active.. This user append is a signal, generated by the user for indicating whether or not an extra recording is still desired after the previous implicit recording. If this is the case, an extra explicit recording is performed.

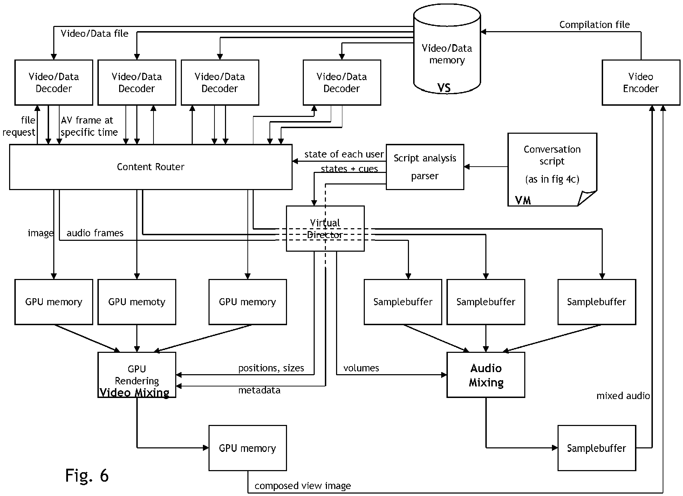

Fig. 6 gives a further detailed embodiment of a server comprising a video data memory module VS, a video sequence manager VM and a video composing module . The latter is not explicitly indicated on Fig. 6, but is is to be understood that all blocks, except VS and VM can be considered as being comprised in the video composing module. A first functional block of the video composing module concerns a script parser for reading and analyzing a conversation script, e.g. a script as shown in Fig. 4c. This conversation script is provided to the parser by the video sequence manager VM. When updating a new video compilation, the parser will check the state of each video frame number from 0 to the end, for each video file to be included in the update .

Applied to the example of a script as shown in fig. 4c, when a user 3 starts an explicit recording after 1 :40 minutes implicit watching, and would thus like to add a video clip in frame 2625 (which is at 25fps 1 min45sec), the state of each user, according to Fig 4c can be derived as follows:
- User 1 : implicit play of frame 1 25 of clip # user 1_19h01.avi
- User 2: implicit freeze of frame 2500 of clip user 2_16hl 8.avi
- User 3: Explicit play of frame 2625 of clip user # 3_16h49.avi

If other data such as PPT or picture files have to be added to the conversation, the parser also identifies which slide or photograph must be shown on that particular frame, according to the script file.

This information is forwarded to the Content Router module of the video composer, which asks the video storage VS to provide the desired files and look for the desired frame number (or slide, etc.) in the file. The respective files are decoded such as to provide raw pixel data files, and the Content Router then directs for each user the correct frame to a graphical processing unit, hereafter abbreviated by GPU, memory. In parallel the audio information, as derived during the decoding of the video clips, is provided to respective sample buffers of an audio mixer. Optionally, for every video file an alpha mask video determining background / foreground segmentation, can also be provided to the GPU.

The Parser sends the earlier determined user state information also to the Virtual Director, possibly augmented with any cue information, if available. For example, in case user clip # 1_19h01.avi only reveals the user laughing from frame 74, on, that information may have been part of the script, and will also be sent as a cue to the Virtual Director.

The Virtual Director will now determine the correct sequence of the individual user frames in the final composed video conversation. It is known that frame 2625 comprises an explicit recording of user 3. This user will accordingly be allocated most of the screen space (eg 50%), in case a multi-view rendering solution is generated. User 2 is not currently recording as his state at 1 min45 indicates a freeze. The Virtual Director may therefore decide not to show it , thus allocating 0%. There is however an implicit recording of user1 and the aforementioned cue indicates that this user laughs with User 3. The Virtual Director may then decide to allocate that user a considerable space e.g. 30% as well. The exact positions of the users in the view also depend on those in the previous frame. There must be a certain continuity with the previous frames as it is not desired to have the user jumping back and forth across the screen. A similar distribution principle can be used for the volume of the audio of each user.

The position information and image space, being expressed as pixel coordinates of rectangles, are provided go to the GPU as well. The Content Router had earlier provided the correct images to an allocated (temporary) GPU memory per user. The GPU rendering engine will now take care of the correct texture for each user frame in the correct position in the final view. Additional metadata, provided by the parser, such as the name of the user and time of recording, can as well be provided to the GPU video mixing engine via the virtual director. The GPU video mixing rendering module can put that information in the respective user view locations, eg in a bar underneath. The final view is rendered and stored in a GPU memory.

A similar operation is taking place on the audio files from the different users, in the sample buffers. These are mixed in accordance to rules for volume allocation, earlier determined by the Virtual Director.

The resulting image and audio frames are then re-assembled and encoded to have a update of a video conversation clip at a certain moment in time. This update is stored in the video storage VS.

A possible implementation of the Virtual Director itself will now be described. It consists of two parts. A first part concerns the determination of the image size and audio volume for each user, followed by a second part related to the positioning of the users in the view itself, taking the total image size into account..

The first part can be performed based on simple ad hoc rules, related to an assignment of some image-size-units for each video ::
- Explicit recordings are assigned 2 units
- Non-freezed implicit recordings get 2 / N units, where N is the total number of users in the conversation.
- freezed recordings obtain 1 / N units.
- Explicit power point inputs are given 3 units, implicit (freezed) power point 2 units.

The total number of image-space units is summed over all users and data, and a percentage of the total amount is calculated for each user. This will then be the number of allocated screen or image space. That information is then used as input for an geometry optimization algorithm, for determining the most optimum size of a rectangle for a respective user, with minimum overlap to the other ones, and within the total given size of the rectangle of the screen. A possible implementation can make use of a "simulated annealing" algorithm. This starts from the positions of the users in a previous frame (or the first frame of any position) and the positions for each user are adjusted a little randomly in different directions.

While the principles of the invention have been described above in connection with specific apparatus, it is to be clearly understood that this description is made only by way of example and not as a limitation on the scope of the invention, as defined in the appended claims. In the claims hereof any element expressed as a means for performing a specified function is intended to encompass any way of performing that function. This may include, for example, a combination of electrical or mechanical elements which performs that function or software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

## Claims

1. Method for generating and updating a composed video conversation from respective video fragments with associated metadata provided so far by a plurality of respective users via respective user clients to a video conversation server arrangement at a particular moment in time , said method comprising the steps of
- activating a video communication service on said respective user clients for setting up a communication with said video conversation server,
- analyzing said associated metadata by said video conversation server
- whereby in case said analysis indicates that a new video conversation is to be started by a user client, assigning a video conversation identification of said new video communication by said server , and providing said identification to said user client, followed by uploading at least one video clip from said user client to said server,
- whereby in case said analysis indicates that an existing video conversation is to be updated, determining an updated sequence order of said respective video fragments provided so far, and encoding an updated sequence of a subset of said respective video fragments for thereby generating an update of said composed video conversation at a particular moment in time .

2. Method according to claim 1 wherein at least one of said video fragments provided by at least one of said user clients is recorded under control of said video communication service.

3. Method according to claim 2 wherein said recording under control of said video communication service is taking place during the time said at least one user associated to said at least one user client is watching the composed video conversation

4. User client adapted to be cooperatively coupled to a video conversation server arrangement, said user client being further adapted to
- receive inputs from a user related to the creation or joining of a video conversation,
- receive inputs from a user with respect to video recordings to be performed by a recording device of said user,
- translating said inputs from said user with respect to said recording device to control the operation of said recording device coupled to said user client,
- receiving video information from said recording device for provision to said conversation server arrangement,
- generating metadata from said user inputs, and said recorded video information with respect to the recorded video, for further provision to said video conversation server arrangement.

5. User client according to claim 4 further being adapted to control the recording of said recording device upon displaying the latest version of said video conversation to said user.

6. User client according to claim 5 further being adapted to mark said recorded video information as either implicit or explicit video information, and providing said information within said metadata to said server.

7. Video conversation server arrangement comprising
- a video storage (VS) for receiving and storing respective video fragments from respective users clients,
- a video sequence manager (VM) adapted to receive respective metadata associated to said respective video fragments for being incorporated into a particular video conversation, from said respective user clients, said video sequence manager being further adapted to decide whether at least one of said fragments has to be split into several sub-fragments, and to update the sequence information indicating the relative position of said different video fragments and sub-fragments with respect to each other in the video conversation at a particular point in time,
- a virtual composer module (VC) adapted to receive the updated sequence information from said video sequence manager (VM), and to update said video conversation at a particular point in time based on said updated sequence information and the respective video fragments and sub-fragments as provided in said sequence information.

8. Video conversation server arrangement according to claim 7, wherein said virtual composer module is further adapted to encode said updated sequence of a subset of said respective video fragments for thereby generating an update of said composed video conversation at a particular moment in time, for being stored within said video storage (VS).

9. Video conversation server according to claim 7 or 9, wherein said virtual sequence manager is further adapted to update said sequence information upon receiving new metadata from said respective user clients
